Europäisches Patentamt

European Patent Office

Office européen des brevets

(19)

(11) Veröffentlichungsnummer : **0 392 323 B1**

# (12) EUROPÄISCHE PATENTSCHRIFT

(45) Veröffentlichungstag der Patentschrift :
**12.08.92 Patentblatt 92/33**

(51) Int. Cl.⁵ : **F16D 1/10,** F16D 3/04,
B41F 13/00

(21) Anmeldenummer : **90106382.6**

(22) Anmeldetag : **03.04.90**

(54) **Einen Achsversatz ausgleichende Wellen-Kupplung.**

(30) Priorität : **13.04.89 DE 3912201**

(43) Veröffentlichungstag der Anmeldung :
**17.10.90 Patentblatt 90/42**

(45) Bekanntmachung des Hinweises auf die
Patenterteilung :
**12.08.92 Patentblatt 92/33**

(84) Benannte Vertragsstaaten :
**CH DE FR GB IT LI**

(56) Entgegenhaltungen :
**DE-A- 3 628 982**
**FR-A- 2 331 712**

(56) Entgegenhaltungen :
**FR-A- 2 398 556**
**GB-A- 2 022 774**
**GB-A- 2 116 669**
**US-A- 2 845 781**

(73) Patentinhaber : **Windmöller & Hölscher**
**Münsterstrasse 50**
**W-4540 Lengerich (DE)**

(72) Erfinder : **Lübke, Herbert**
**Stiller Winkel 3**
**W-4543 Lienen 2 (DE)**

(74) Vertreter : **Gossel, Hans K., Dipl.-Ing.**
**Lorenz-Seidler-Gossel et al**
**Widenmayerstrasse 23**
**W-8000 München 22 (DE)**

EP 0 392 323 B1

## Beschreibung

Die Erfindung betrifft eine einen Achsversatz ausgleichende Wellen-Kupplung mit radial verschieblichen Gliedern, vorzugsweise zum Ankuppeln eines Wellenzapfens einer Druckwalze an eine Antriebswelle, mit formschlüssig ineinander greifenden Kupplungsteilen, die mit den zu kuppelnden Wellen verbunden sind, und mit einer diese verspannenden Einrichtung.

Kupplungen dieser Art werden verwendet, wenn sich ein Achsversatz der miteinander zu kuppelnden Wellen nicht vermeiden läßt. In Mehrfarbendruckmaschinen werden die Druckwalzen der einzelnen Druckwerke von Antriebswellen angetrieben, wobei zwischen jeder Antriebswelle und jedem Walzenzapfen einer Druckwalze eine einen Achsversatz ausgleichende Wellen-Kupplung angeordnet ist, die den nie ganz zu vermeidenden Achsversatz zwischen der Antriebswelle und dem Wellenzapfen der Druckwalze ausgleicht. Derartige Kupplungen sind als sogenannte "Oldhamkupplungen" bekannt. Wird nun beispielsweise bei einer Sechs-Farben-Druckmaschine statt mit sechs Farben nur mit vier Farben gedruckt, werden die beiden nicht zum Druck benötigten Druckwalzen von ihren Antrieben abgekuppelt. Die Antriebswellen mit den auf diesen angeordneten einen Achsversatz ausgleichenden Kupplungsteilen laufen jedoch weiter. Ist der einen Achsversatz ausgleichende Kupplungsteil nicht mehr mit einem diesen stützenden Wellenzapfen der Druckwalze verbunden, kann es zu einem unerwünschten radialen Auswandern der radial verschieblichen Glieder dieses Kupplungsteils kommen, was unerwünschte Unwuchten zur Folge hat. Diese Unwuchten führen nicht nur zu erheblichen Lagerbelastungen der Antriebswellen, sondern insbesondere auch zu einem unruhigen Lauf der Druckmaschine.

Aufgabe der Erfindung ist es daher, eine Wellen-Kupplung der eingangs angegebenen Art zu schaffen, die nach ihrer Trennung und Weiterlauf des den Achsversatz ausgleichenden Kupplungsteils mit der Antriebswelle keine Unwuchten erzeugt.

Erfindungsgemäß wird diese Aufgabe bei einer Wellen-Kupplung der gattungsgemäßen Art dadurch gelöst, daß eine radial verschiebliche äußere Kupplungsscheibe der Wellenkupplung ein Teil mit einer zentralen Bohrung zeigt, in die ein in dieser zentrierter axial verschieblicher Bolzen greift, der im entkuppelten Zustand der Wellenkupplung durch eine Feder in eine zentrale Bohrung oder Ausnehmung der Antriebswelle oder eines mit dieser verbundenen Teiles eingerückt wird. Bei der erfindungsgemäßen Wellen-Kupplung ist im entkuppelten Zustand die äußere Kupplungsscheibe des den Achsversatz ausgleichenden Kupplungsteils durch den axial verschieblichen Bolzen an der Antriebswelle zentriert, so daß die radial verschieblichen Glieder dieses Kupplungsteils nicht mehr radial auswandern und Unwuchten erzeugen können. Im Falle einer Mehrfarben-Druckmaschine lassen sich also die Druckwalzen einzelner Druckwerke von ihren Antriebswellen abkuppeln, ohne daß die mit den Antriebswellen dieser Druckwerke weiterrotierenden einen Achsversatz ausgleichenden Kupplungsteile Unwuchten erzeugen können.

Zweckmäßigerweise ist der zentrierte Bolzen ein Spannzangen tragender Zugkopf einer Spanneinrichtung, der mit einer in einer axialen Bohrung der Antriebswelle geführten Stange versehen ist, wobei die Stange von einer Feder beaufschlagt ist, die bestrebt ist, den Zugkopf in eine diesen an der Antriebswelle zentrierende Stellung zu bewegen. Der Zugkopf kann an seiner der Antriebswelle zugewandten Seite mit einer kegelstumpfförmigen Schulter versehen sein, die in ihrer an der Antriebswelle zentrierten Stellung in eine komplementäre hohlkegelige Randaussparung der Bohrung der Antriebswelle greift.

In weiterer Ausgestaltung der Erfindung ist vorgesehen, daß das mit der äußeren Kupplungsscheibe verbundene Teil mit einer im Querschnitt trapezförmigen Aussparung versehen ist, in die formschlüssig ein komplementäres Kupplungsteil der angekuppelten Welle greift, wobei das Kupplungsteil mit einem Fortsatz versehen ist, an dem die Spannzangen angreifen. Die Spannzangen verspannen die formschlüssig miteinander gekuppelten Kupplungsteile miteinander, so daß eine gute und spielfreie Kupplung der miteinander zu kuppelnden Wellen gewährleistet ist.

Der Fortsatz weist zweckmäßigerweise einen Abschnitt auf, der in der Bohrung des mit der äußeren Kupplungsscheibe verbundenen Teils zentriert ist.

Die Stange kann eine Druckfeder durchsetzen, die sich einerseits auf einer Ringschulter, die durch einen kupplungsseitigen Abschnitt der zentralen Bohrung der Antriebswelle mit verringertem Durchmesser gebildet ist, und andererseits auf einen verbreiterten endseitigen Kopf der Stange abstützt. Die Druckfeder ist somit bestrebt, die Stange immer in eine Richtung zu bewegen, in der der durch den Zugkopf gebildete Bolzen zentrierend an der Antriebswelle angreift. Zum Lösen der spannenden Verbindung ist die Stange entgegen der Kraft der Federn zu bewegen, so daß die Spannzangen außer Eingriff mit dem angekuppelten Teil kommen.

Das mit der äußeren Kupplungsscheibe verbundene Teil besteht zweckmäßigerweise aus einem zentralen rohrförmigen Teil mit endseitigem verbreiterten Flansch. Die zentrierende Bohrung ist in dem rohrförmigen Teil vorgesehen.

Ein Ausführungsbeispiel der Erfindung wird nachstehend anhand der Zeichnung näher erläutert. In dieser zeigt

2

Fig. 1 einen Längsschnitt durch eine einen Achsversatz ausgleichende Kupplung, die eine Antriebswelle mit dem Wellenzapfen einer Druckwalze verbindet,

Fig. 2 den mittleren Teil der Kupplung nach Fig. 1 mit den die spannende Verbindung bewirkenden Spannzangen,

Fig. 3 einen Schnitt durch die Kupplung längs der Linie III-III in Fig. 1 und

Fig. 4 eine Stirnansicht des entkuppelten linken Kupplungsteils in Fig. 1.

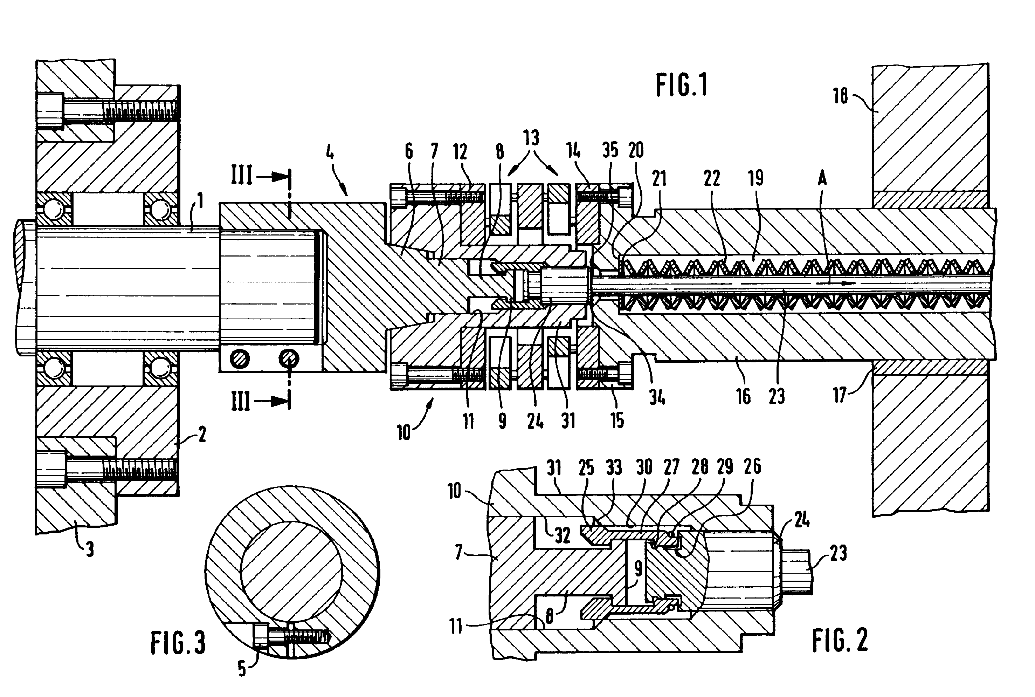

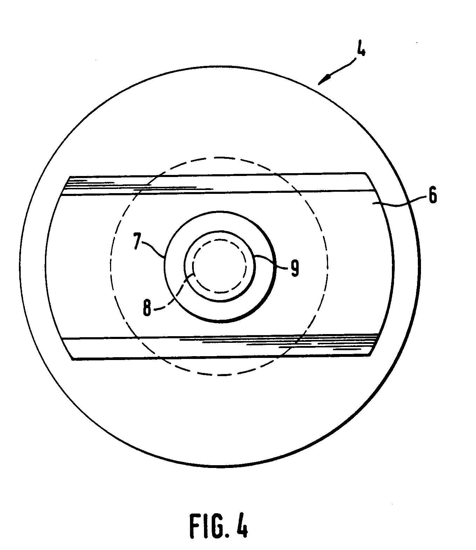

Aus Fig. 1 ist ein Walzenzapfen 1 einer nicht näher dargestellten Druckwalze einer Mehrfarben-Druckmaschine ersichtlich, der über ein Flanschlager 2 mit der Seitenwand eines nicht dargestellten Farbwalzenschlittens üblicher Bauart verbunden ist. Auf das aus dem Flanschlager nach rechts hervorragende Ende des Walzenzapfens 1 ist ein Kupplungsteil 4 aufgesetzt, welches über eine Klemmschraube 5 fest mit dem Walzenzapfen 1 verbunden ist. Dieses Kupplungsteil 4 ist in der Fig. 4 in der Draufsicht dargestellt. Man erkennt, daß das Kupplungsteil 4 einen im Querschnitt trapezförmigen Mitnahmeansatz 6 aufweist, an den sich ein zylindrischer Führungszapfen 7 anschließt. Dieser Führungszapfen 7 weist einen zylindrischen Ansatz 8 auf, dessen frei auslaufendes Ende mit einem nach außen überstehenden Kragen 9 versehen ist. Der im Querschnitt trapezförmige Mitnahmeansatz 6 ragt in eine entsprechnde Ausnehmung eines Aufnahmekopfes 10 hinein, wobei der zylindrische Führungszapfen 7 in einer Bohrung 11 des Aufnahmekopfes geführt ist. Mit dem Aufnahmekopf 10 ist die äußere Kupplungsscheibe 12 einer insgesamt mit 13 bezeichneten Kupplung zum Ausgleich eines Achsversatzes fest verschraubt. Die andere äußere Scheibe 14 der Kupplung 13 ist fest mit einem äußeren umlaufenden Befestigungsring 15 verschraubt, der Teil der Antriebswelle 16 ist. Diese Antriebswelle 16 ist über ein Gleitlager 17 drehbar sowie auch axial verschiebbar in der Seitenwand 18 einer Druckmaschine gelagert. Neben dem äußeren Befestigungsring 15 weist die Antriebswelle 16 eine axiale Bohrung 19 auf, wobei die Bohrung 19 im linken endseitigen Bereich der Welle 16 im Durchmesser verkleinert ist, so daß in diesem Bereich ein nach innen weisender Ansatz 20 entsteht. Gegen diesen Ansatz 20 stützt sich unter Zwischenlage einer Scheibe 21 eine Druckfeder 22 ab. Die Druckfeder 22 umgibt eine Stange 23, die einen nicht dargestellten Kragen aufweist, gegen den sich die Feder 22 an dem der Scheibe 21 abgewandtem Ende abstützt, so daß die Stange 23 durch die Feder 22 stets in Richtung des Pfeiles A gedrückt wird. Dies bewirkt, daß der mit dem linken Ende der Stange 23 verbundene Zugkopf 24 über die Spannzangen 25 das Kupplungsteil 4 fest gegen den Aufnahmekopf 10 zieht.

Die Spannzangen 25 sind an sich bekannter Bauart und werden daher nur kurz beschrieben. Der Zugkopf 24 ist mit einer ringnutartigen Ausdrehung 26 versehen, in der die Schenkel 27 der Spannzangen um Schwenkzapfen 28 verschwenkt werden können, wobei die Enden der Schenkel 27 von einem umlaufenden Federring 29 gegen die Lagerausdrehung 26 gepreßt werden, wodurch die Spannzangen 25 stets das Bestreben haben, sich nach außen zu bewegen. Dies wird bei den dargestellten Klemmstellen der Spannzangen dadurch verhindert, daß diese in einer sie von außen eng umschließenden Paßbohrung 30 geführt sind. Diese Bohrung 30 ist in den zylindrischen Ansatz 31 des Aufnahmekopfes 10 eingebracht. In Richtung auf den Wellenzapfen 1 hin erweitert sich die Bohrung zu einer Bohrung 32. Wird nun die Stange 23 entgegen der Richtung des Pfeiles A und entgegen der Kraft der Feder 22 nach links gedrückt, gleiten die Spannzangen 25 über die Schrägfläche 33 nach außen und legen sich an die Innenwand der im Vergleich zur Bohrung 30 größeren Bohrung 32 an. Danach wird die Welle auf nicht dargestellte Weise nach rechts verschoben, so daß das Kupplungsteil 4 und der Aufnahmekopf 10 miteinander nicht mehr in Antriebsverbindung stehen. Danach wird der Druck auf die Feder 22 aufgehoben, so daß diese die Stange 23 in Pfeilrichtung A bewegt. Hierdurch legt sich die geneigte Ringfläche 34 des Zugkopfes 24 gegen die Schrägfläche 35 des Ansatzes 20, so daß der Zugkopf 24 an der Welle 16 zentriert ist. Da nun aber, wie aus der Fig. 2 deutlich hervorgeht, der zylindrische Ansatz 31 des Aufnahmekopfes 10 den Zugkopf 24 fest umschließt, ist auch dieser Aufnahmekopf zur Welle 16 zentriert und damit auch die äußere Kupplungsscheibe 12 der Kupplung 13. Eine außermittige Verlagerung der äußeren Kupplungsscheibe 12 gegenüber der Welle 16 ist nicht mehr möglich.


**Patentansprüche**

1. Einen Achsversatz ausgleichende Wellen-Kupplung mit radial verschieblichen Gliedern, vorzugsweise zum Ankuppeln eines Wellenzapfens einer Druckwalze an eine Antriebswelle, mit formschlüssig ineinander greifenden Kupplungsteilen, die mit den miteinander zu kuppelnden Wellen verbunden sind, und mit einer diese verspannenden Einrichtung,

**dadurch gekennzeichnet,**

daß eine radial verschiebliche äußere Kupplungsscheibe (12) der Wellen-Kupplung ein Teil (10) mit einer zentralen Bohrung (11) trägt, in die ein in dieser zentrierter, axial verschieblicher Bolzen (24) greift, der im entkuppelten Zustand der Wellen-Kupplung durch eine Feder (22) in eine zentrale Bohrung oder Ausnehmung (35) in der Antriebswelle (16) oder eines mit dieser verbundenen Teils eingerückt wird.

2. Wellen-Kupplung nach Anspruch 1, dadurch gekennzeichnet, daß der zentrierte Bolzen (24) ein Spannzangen (25) tragender Zugkopf einer Spanneinrichtung ist, der mit einer in einer axialen Bohrung (19) der Antriebswelle (16) geführten Stange (23) versehen ist, und daß die Stange (23) von einer Feder (22) beaufschlagt ist, die bestrebt ist, den Zugkopf in eine diesen an der Antriebswelle (16) zentrierende Stellung zu bewegen.

3. Wellen-Kupplung nach Anspruch 1 oder 2, dadurch gekennzeichnet, daß der Zugkopf (24) an seiner der Antriebswelle (16) zugewandten Seite mit einer kegelstumpfförmigen Schulter (34) versehen ist, die in ihrer an der Antriebswelle (16) zentrierten Stellung in eine komplementäre hohlkegelige Randaussparung (35) der Bohrung (19) der Antriebswelle (16) greift.

4. Wellen-Kupplung nach einem der Ansprüche 1 bis 3, dadurch gekennzeichnet, daß das Teil (10) mit einer im Querschnitt trapezförmigen Aussparung versehen ist, in die formschlüssig ein komplementäres Kupplungsteil (6) der angekuppelten Welle greift, und daß das Kupplungsteil (6) mit einem Fortsatz (7, 8, 9) versehen ist, an dem die Spannzangen (25) angreifen.

5. Wellen-Kupplung nach einem der Ansprüche 1 bis 4, dadurch gekennzeichnet, daß der Fortsatz einen Abschnitt (7) aufweist, der in der Bohrung (11) des Teils (10) zentriert ist.

6. Wellen-Kupplung nach einem der Ansprüche 1 bis 5, dadurch gekennzeichnet, daß die Stange (23) eine Druckfeder (22) durchsetzt, die sich einerseits auf einer Ringschulter (20), die durch einen kupplungsseitigen Abschnitt der zentralen Bohrung (19) der Antriebswelle (16) mit verringertem Durchmesser gebildet ist, und andererseits auf einem verbreiterten endseitigen Kopf der Stange (23) abstützt.

7. Wellen-Kupplung nach einem der Ansprüche 1 bis 6, dadurch gekennzeichnet, daß das Teil (10) aus einem zentralen rohrförmigen Teil (31) mit endseitigem verbreiterten Flansch besteht.

## Claims

1. A shaft coupling compensating axial offset with radially displaceable elements, preferably for coupling a shaft journal of a printing cylinder to a drive shaft, with conjugately interengaging coupling components connected to the shafts to be coupled together, and with a device bracing these components, **characterized in that** a radially displaceable outer clutch disk (12) of the shaft coupling carries a component (10) with a central bore (11) in which there engages an axially displaceable pin (24) centred therein, which pin is in the uncoupled state of the shaft coupling pressed by a spring (22) into a central bore or recess (35) in the drive shaft (16) or of a part connected thereto.

2. A shaft coupling according to claim 1, characterized in that the centred pin (24) is a draw head of a clamping device carrying collet chucks (25), which head is provided with a rod (23) carried in an axial bore (19) of the drive shaft (16), and that the rod (23) is loaded by a spring (22) which tends to move the draw head into a position centring the latter on the drive shaft (16).

3. A shaft coupling according to claim 1 or 2, characterized in that the draw head (24) is provided on its side facing the drive shaft (16) with a frustoconical shoulder (34) which, in its position centred on the drive shaft (16), engages in a complementary hollow conical rim recess (35) of the bore (19) of the drive shaft (16).

4. A shaft coupling according to one of the claims 1 to 3, characterized in that the part (10) is provided with a recess that it trapezoidal in cross-section, into which there conjugately engages a complementary clutch component (6) of the coupled shaft, and that the clutch component (6) is provided with an extension (7, 8, 9) on which the collet chucks (25) are acting.

5. A shaft coupling according to one of claims 1 to 4, characterized in that the extension has a section (7) that is centred in the bore (11) of the part (10).

6. A shaft coupling according to one of claims 1 to 5, characterized in that the rod (23) traverses an compression spring (22) which bears on one side on an annular shoulder (20) formed by a section with a reduced diameter on the coupling side of the central bore (19) of the drive shaft (16) and on the other side, on a widened head at the end of the rod (23).

7. A shaft coupling according to one of claims 1 to 6, characterized in that the part (10) consists of a central tubular part (31) which is widened flange at its end.

## Revendications

1. Accouplement pour arbres du type à compenser un décalage d'arbre et comprenant des organes pouvant être déplacés radialement, de préférence pour l'accouplement d'un tourillon d'arbre d'un cylindre de compression à un arbre moteur, avec des éléments d'accouplement engrenant les uns dans les autres par engagement positif dû à leur forme qui sont reliées aux arbres à accoupler les uns aux autres, et avec un dispositif reliant ceux-ci,

**caractérisé en ce**

qu'un disque d'accouplement extérieur (12) pouvant être déplacé radialement de l'accouplement de l'arbre supporte un élément (10) présentant un alésage central (11) dans lequel vient en prise un boulon (24) déplaçable axialement, centré dans celui-ci, qui dans l'état désaccouplé de l'accouplement de l'arbre est amené par un ressort (22) dans un alésage ou évidemment central (35) dans l'arbre moteur (16) ou d'un élément relié à celui-ci.

2. Accouplement pour arbres selon la revendication 1, caractérisé en ce que le boulon centré (24) est une tête de traction supportant des pinces de serrage (25) d'un dispositif de serrage qui est pourvu d'une tige (23) guidée dans un alésage axial (19) de l'arbre moteur (16), et en ce que la tige (23) est sollicitée par un ressort (22) qui s'efforce à déplacer la tête de traction dans une position centrant celle-ci sur l'arbre moteur (16).

3. Accouplement pour arbres selon la revendication 1 ou 2, caractérisé en ce que la tête de traction (24) sur son côté orienté vers l'arbre moteur (16) est pourvue d'un épaulement tronconique (34) qui, dans sa position centrée sur l'arbre moteur (16), vient en prise dans un évidement de bord (35) complémentaire en cône creux de l'alésage (19) de l'arbre moteur (16).

4. Accouplement pour arbres selon l'une des revendications 1 à 3, caractérisé en ce que l'élément (10) est pourvu d'un évidement trapézoïdal en section transversale dans lequel vient en prise, par engagement positif dû à sa forme, un élément d'accouplement complémentaire (6) de l'arbre accouplé, et en ce que l'élément d'accouplement (6) est pourvu d'un prolongement (7, 8, 9) sur lequel viennent en prise les pinces de serrage (25).

5. Accouplement pour arbres selon l'une des revendications 1 à 4, caractérisé en ce que le prolongement présente un tronçon (7) qui est centré dans l'alésage (11) de l'élément (10).

6. Accouplement pour arbres selon l'une des revendications 1 à 5, caractérisé en ce que la tige (23) passe à travers un ressort à pression (2) qui est supporté d'une part sur un épaulement annulaire (20) qui est constitué par un tronçon côté accouplement de l'alésage central (19) de l'arbre moteur (16) d'un diamètre réduit, et d'autre part sur une tête élargie côté extrémité de la tige (23).

7. Accouplement pour arbres selon l'une des revendications 1 à 6, caractérisé en ce que l'élément (10) est constitué par un élément central tubulaire (31) comprenant une bride élargie côté extrémité.

FIG.1

FIG.3

FIG.2

EP 0 392 323 B1

FIG. 4